# EUROPEAN PATENT APPLICATION

(11) **EP 4 582 725 A1**
(43) Date of publication of application: **09.07.2025**
(21) Application number: 23860171.0
(22) Date of filing: 24.08.2023
(51) Int. Cl.: F16K 31/528, B01D 24/42, B01D 29/92

(54) **VALVE AND FILTER CONTAINER**

(30) Priority: 02.09.2022 JP 2022139810; 07.12.2022 JP 2022195291
(71) Applicant: Roki Techno Co., Ltd., Tokyo 140-8576 (JP)
(72) Inventor: UCHIDA, Tetsuya, Tokyo 140-8576 (JP)
(74) Representative: Grünecker Patent- und Rechtsanwälte PartG mbB
(86) International application number: PCT/JP2023/030457
(87) International publication number: WO 2024/048408

(57) **Abstract**

There is a need for a valve with a simple structure capable of switching between opening and closing of a flow channel, while preventing twisting of a tube constituting the flow channel due to rotation.

It is solved by the valve including: a first pipe having a first pipe end, the first pipe having an external shape of a cylinder, the first pipe having a first flow channel inside, the first flow channel extending in a direction of an axis of the cylinder, the first flow channel forming an opening in the first pipe end; a second pipe extending coaxially with the axis, the second pipe having a second pipe end, the second pipe having an external shape of a cylinder, the second pipe having a second flow channel inside, the second flow channel extending in the direction of the axis, an insertion portion of the second pipe end being inserted into the first flow channel of the first pipe from the opening of the first pipe; and a rotating ring held by each of the first pipe and the second pipe on outer peripheral surfaces of the first pipe and the second pipe, to be able to perform rotation around the axis.

## Description

### Technical Field

The present invention relates to a valve and a filter container.

### Background Art

There are valves in which opening and closing of a flow channel are performed by rotary action. For example, PTL 1 discloses a plunger in which a flow channel is opened and closed by rotation.

### Citation List

### Patent Literature

PTL 1: Japanese Patent No. 5753557

### Summary of Invention

### Technical Problem

For example, in the plunger disclosed in Patent Literature PTL 1, there is a problem in that twisting occurs in the plunger constituting the flow channel, due to rotation for opening and closing. In particular, in a structure in which a plunger is rotated by using a cam groove and a cam follower, there is a problem in that flow channel twisting inevitably occurs. In particular, in a valve structure to which a flexible tube is connected, there is a problem in that the frequency of twisting of the tube constituting a flow channel becomes high, and the durability of the structure including a valve becomes low. Furthermore, there is also a problem in that, due to the elasticity of the tube, twisting occurs in the tube, and a malfunction of the valve is caused by the restoring force due to the twisting of the tube. There is a need for a simple structure capable of switching between opening and closing of a flow channel by rotation, while preventing twisting of a tube constituting the flow channel.

### Solution to Problem

It is provided, a valve including: a first pipe having a first pipe end, the first pipe having an external shape of a cylinder, the first pipe having a first flow channel inside, the first flow channel extending in a direction of an axis of the cylinder, the first flow channel forming an opening in the first pipe end; a second pipe extending coaxially with the axis, the second pipe having a second pipe end, the second pipe having an external shape of a cylinder, the second pipe having a second flow channel inside, the second flow channel extending in the direction of the axis, an insertion portion of the second pipe end being inserted into the first flow channel of the first pipe from the opening of the first pipe; and a rotating ring held by each of the first pipe and the second pipe on outer peripheral surfaces of the first pipe and the second pipe, to be able to perform rotation around the axis, wherein the second flow channel does not reach the second pipe end, and extends toward an inner wall of the first flow channel in the insertion portion of the second flow channel to form an opening in the insertion portion of the second flow channel, wherein a cam follower protrusion is provided on a surface of the first pipe, wherein the rotating ring includes a guide cam groove configured to receive the cam follower protrusion, the cam follower protrusion moved, by the rotation of the rotating ring, in the guide cam groove between a first position and a second position so that the first pipe and the second pipe perform relative movement, the insertion portion of the second pipe end of the second pipe becoming longest at the first position, the insertion portion of the second pipe end of the second pipe becoming shorter than at the first position at the second position, and wherein the valve has a closed state and an open state, the first flow channel and the second flow channel being not in fluid communication at the first position in the closed state, the first flow channel and the second flow channel being in fluid communication at the second position in the open state.

It is provided, a filter container including a valve, the valve including: a first pipe having a first pipe end, the first pipe having an external shape of a cylinder, the first pipe having a first flow channel inside, the first flow channel extending in a direction of an axis of the cylinder, the first flow channel forming an opening in the first pipe end, an opposite side of the first flow channel from the first pipe end communicating with an inside of the filter container; a second pipe extending coaxially with the axis, the second pipe having a second pipe end, the second pipe having an external shape of a cylinder, the second pipe having a second flow channel inside, the second flow channel extending in the direction of the axis, an insertion portion of the second pipe end being inserted into the first flow channel of the first pipe from the opening of the first pipe; and a rotating ring held by each of the first pipe and the second pipe on outer peripheral surfaces of the first pipe and the second pipe, to be able to perform rotation around the axis, wherein the second flow channel does not reach the second pipe end, and extends toward an inner wall of the first flow channel in the insertion portion of the second flow channel to form an opening in the insertion portion of the second flow channel, wherein a cam follower protrusion is provided on a surface of the first pipe, wherein the rotating ring includes a guide cam groove configured to receive the cam follower protrusion, the cam follower protrusion moved, by the rotation of the rotating ring, in the guide cam groove between a first position and a second position so that the first pipe and the second pipe perform relative movement, the insertion portion of the second pipe end of the second pipe becoming longest at the first position, the insertion portion of the second pipe end of the second pipe becoming shorter than at the first position at the second position, and wherein the valve has a closed state and an open state, the first flow channel and the second flow channel being not in fluid communication at the first position in the closed state, the first flow channel and the second flow channel being in fluid communication at the second position in the open state.

### Advantageous Effects of Invention

According to the present invention, it becomes possible to realize, with a simple structure, a valve capable of switching between opening and closing of a flow channel, while preventing twisting of a tube constituting the flow channel due to rotation.

### Brief Description of Drawings

Fig. 1 is a perspective view of a valve, which is a first embodiment of the present invention.
Fig. 2A is a side view of the valve in a closed state of the first embodiment of the present invention.
Fig. 2B is a cross-sectional view of the valve in the closed state of the first embodiment of the present invention.
Fig. 3A is a side view of the valve in an open state of the first embodiment of the present invention.
Fig. 3B is a cross-sectional view of the valve in the close state of the first embodiment of the present invention.
Fig. 4A is a cross-sectional view illustrating a holding portion of a rotating ring of a valve in another embodiment of the present invention.
Fig. 4B is a cross-sectional view illustrating the holding portion of the rotating ring of the valve in another embodiment of the present invention.
Fig. 4C is a cross-sectional view illustrating the holding portion of the rotating ring of the valve in another embodiment of the present invention.
Fig. 5A is a diagram illustrating another embodiment of a guide cam groove and a follower protrusion of the embodiment of the present invention.
Fig. 5B is a diagram illustrating still another embodiment of the guide cam groove and the follower protrusion of the embodiment of the present invention.
Fig. 5C is a diagram illustrating yet another embodiment of the guide cam groove and the follower protrusion of the embodiment of the present invention.
Fig. 5D is an enlarged view of the guide cam groove and the follower protrusion in Fig. 5C, as viewed from an axis direction of the follower protrusion.
Fig. 5E is a diagram illustrating a further embodiment of the guide cam groove and the follower protrusion of the embodiment of the present invention.

### Description of Embodiments

### [First Embodiment]

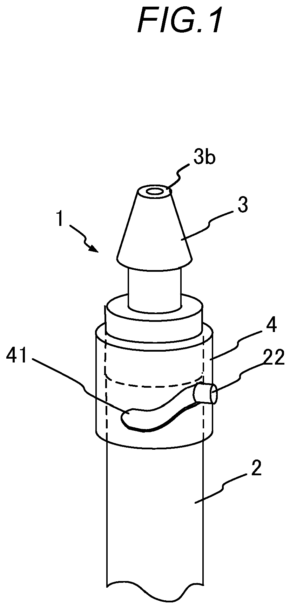

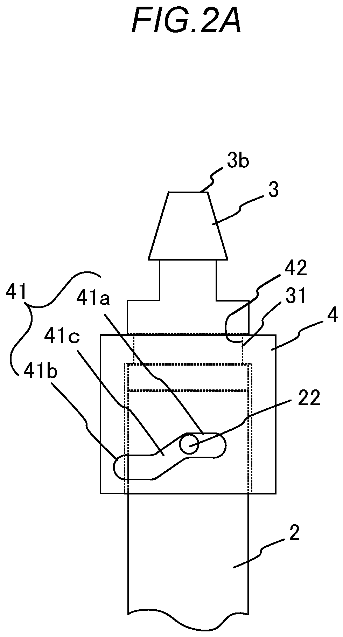

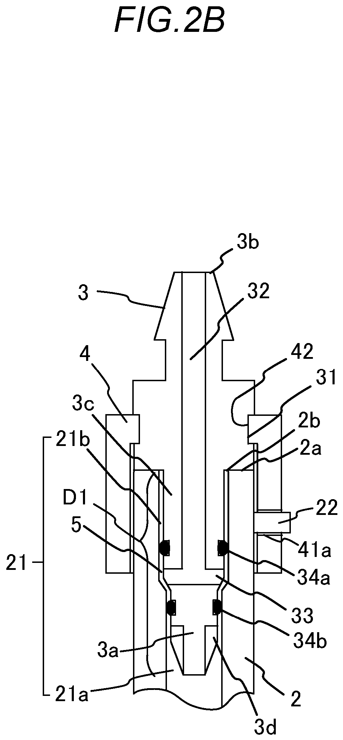

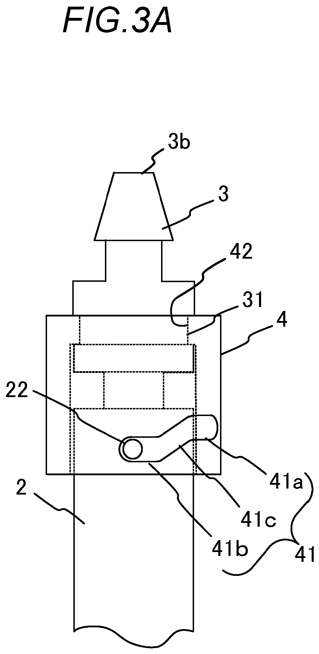

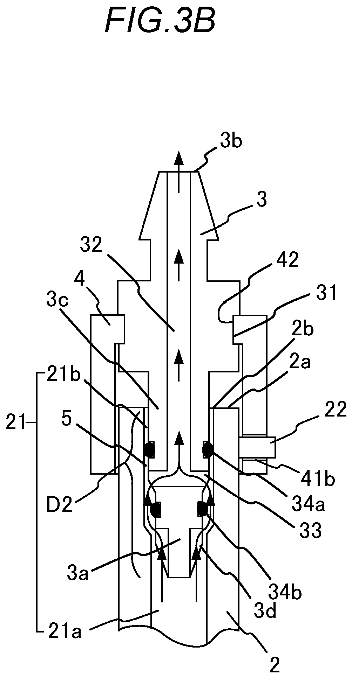

Referring to Fig. 1 to Fig. 3B, a valve 1 as an embodiment of the invention will be described. Fig. 1 is a perspective view of the valve 1, which is a first embodiment of the present invention. Fig. 2A is a side view of the valve 1 in a closed state of the first embodiment of the present invention. Fig. 2B is a cross-sectional view of the valve 1 in the closed state of the first embodiment of the present invention. Fig. 3A is a side view of the valve 1 in an open state of the first embodiment of the present invention. Fig. 3B is a cross-sectional view of the valve 1 in the closed state of the first embodiment of the present invention.

The valve 1 includes a first pipe 2, a second pipe 3, and a rotating ring 4. The first pipe 2 has a first pipe end 2a, and has an external shape of a cylinder. The first pipe 2 has a first flow channel 21 inside, such that the first flow channel 21 extends in a direction of an axis of the cylinder forming the external shape. The first flow channel 21 forms a first pipe end opening 2b in the first pipe end 2a. The diameter of the first flow channel 21 expands in first pipe end opening 2b. That is, the first flow channel 21 consists of a first flow channel mainstream portion 21a having a narrow diameter, and a first flow channel enlarged portion 21b having a larger diameter. The first pipe end opening 2b is formed as an opening of the first flow channel enlarged portion 21b. An end (not illustrated) opposite to the first pipe end 2a is connected to a fluid source, and the first flow channel 21 communicates with the fluid source. The first flow channel 21 on the first pipe end 2a side is typically a cylindrical shape.

The second pipe 3 extends coaxially with an axis of the first pipe 2. The second pipe has a second pipe end 3a at one end, and has a second pipe termination portion 3b at the other end, which is opposite to the second pipe end 3a. The second pipe 3 has a second flow channel 32 inside, extending in an axis direction.

The valve 1 is a valve that allows fluid to flow between the first flow channel 21 and the second flow channel 32, one of the first flow channel 21 and the second flow channel 32 can be upstream, and the other of them can be downstream. In this description, hereinafter, as a representative example, the first flow channel 21 will be described to be upstream, and the second flow channel 32 will be described to be downstream.

The second pipe 3 includes, on a side including the second pipe end 3a, an insertion portion 3c having a shape complementary to the first flow channel 21 on the first pipe end 2a side. When the first flow channel 21 on the first pipe end 2a side has a typical cylindrical shape, the insertion portion 3c has a cylindrical shape. The insertion portion 3c of the second pipe 3 is inserted into the first flow channel enlarged portion 21b of the first flow channel 21 of the first pipe 2 from the first pipe end opening 2b of the first pipe 2. The portion of the second pipe end 3a of the insertion portion 3c of the second pipe 3 has a radius smaller than the radius of the cylindrical shape of the insertion portion 3c of the second pipe 3.

In a state where the insertion portion 3c of the second pipe 3 is inserted into the inside of the first flow channel 21 of the first pipe 2, the outer diameter of the insertion portion 3c of the second pipe 3 is slightly smaller than the inner diameter of the first flow channel enlarged portion 21b of the first flow channel 21 of the first pipe 2, a flow channel gap 5 is formed between the outer diameter of the insertion portion 3c of the second pipe 3 and the inner diameter of the first flow channel 21 of the first pipe 2. The flow channel gap 5 is a gap formed between the first flow channel enlarged portion 21b and the insertion portion 3c of the second pipe 3.

A central axis of the insertion portion 3c of the second pipe 3 is coaxial with a central axis of the first flow channel 21 of the first pipe 2, and the insertion portion 3c of the second pipe 3 is movable along the central axis of the first flow channel 21 of the first pipe 2. The movement has a movement amount with which the insertion length of the insertion +portion 3c of the second pipe 3 inserted into the first flow channel 21 of the first pipe 2 is between D1 and D2 shorter than D1. In the closed state of the valve 1, the insertion length of the insertion portion 3c of the second pipe 3 is D1, which is a state where the insertion portion 3c of the second pipe 3 is inserted deepest into the first flow channel 21 of the first pipe 2. On the other hand, in the open state of the valve 1, the insertion length of the insertion portion 3c of the second pipe 3 is D2, which is a state where the insertion portion 3c of the second pipe 3 is inserted shallowest into the first flow channel 21 of the first pipe 2.

The second flow channel 32 forms an opening in the second pipe termination portion 3b, and extends from the second pipe termination portion 3b toward the second pipe end 3a. However, the second flow channel 32 does not reach the second pipe end 3a, and extends in the axis direction toward an inner wall of the first flow channel 21 in the insertion portion 3c of the second flow channel 32, and forms an opening 33 in a peripheral surface of the insertion portion 3c of the second flow channel 32. The opening 33 of the insertion portion 3c of the second flow channel 32 is in fluid communication with the flow channel gap 5.

In the insertion portion 3c of the second pipe 3, a seal member 34a (first seal member) is arranged around the entire circumference of the insertion portion 3c of the second pipe 3 on the first pipe end opening 2b side in the flow channel gap 5, so that the flow channel gap 5 does not communicate with the outside of the first pipe end opening 2b via the first pipe end opening 2b in the first pipe end 2a. The seal member 34a is in close contact with an inner surface of the first flow channel enlarged portion 21b of the first flow channel 21, and is arranged so that the second pipe 3 is slidable in the first flow channel 21. The seal member 34a is a seal member that ensures that the fluid in the flow channel gap 5 flows into the opening 33 of the insertion portion 3c of the second flow channel 32. In both the open state and the closed state of the valve 1, the flow channel gap 5 is fluidly isolated, by the seal member 34a, and does not communicate with the first pipe end 2a side of the seal member 34a in the central axis direction of the first flow channel 21 of the first pipe 2.

On the other hand, a seal member 34b (second seal member) is arranged around the entire circumference of the second pipe end 3a of the second pipe 3 on the opposite side of the position of the seal member 34a with respect to the opening 33 of the insertion portion 3c of the second flow channel 32 in the central axis direction of the first flow channel 21 of the first pipe 2. The outer diameter of the seal member 34b is smaller than the outer diameter of the seal member 34a. While the seal member 34a is in close contact with the inner surface of the first flow channel enlarged portion 21b of the first flow channel 21, and is arranged so that the second pipe 3 is slidable in the first flow channel 21, the seal member 34b is arranged so that, in the closed state of the valve 1, that is, when the insertion length of the insertion portion 3c of the second pipe 3 is D1, the seal member 34b is in close contact with the inner surface of the first flow channel mainstream portion 21a of the first flow channel 21, so that the second pipe 3 is slidable in the first flow channel 21. On the other hand, in the open state of the valve 1, that is, when the insertion length the insertion portion 3c of the second pipe 3 is D2, the seal member 34b moves into the first flow channel enlarged portion 21b of the first flow channel 21 from the first flow channel mainstream portion 21a of the first flow channel 21. Since the outer diameter of the seal member 34b is smaller than the inner diameter of the first flow channel enlarged portion 21b of the first flow channel 21, a gap is formed between an external surface of the seal member 34b and the inner surface of the first flow channel enlarged portion 21b. Accordingly, in the closed state of the valve 1, the flow channel gap 5 is fluidly isolated, by the seal member 34b, and does not communicate with the first flow channel mainstream portion 21a on the opposite side of the seal member 34b from the first pipe end 2a in the central axis direction of the first flow channel 21 of the first pipe 2. On the other hand, in the open state of the valve 1, even if there is the seal member 34b, the flow channel gap 5 is in fluid communication with the first flow channel mainstream portion 21a in the central axis direction of the first flow channel 21 of the first pipe 2.

Accordingly, in the open state of the valve 1, a flow circuit is constituted in which the fluid inside the first flow channel 21 of the first pipe 2 reaches the second flow channel 32 from the opening 33 in the peripheral surface of the insertion portion 3c of the second flow channel 32 via the flow channel gap 5 from the first flow channel mainstream portion 21a, and is discharged from the opening of the second pipe termination portion 3b to the outside. Grooves 3d for reducing the area of a surface perpendicular to the central axis of the first flow channel 21 of the first pipe 2 can be arranged in the second pipe end 3a of the second pipe 3 to enlarge the flow channel, so that the fluid inside the first flow channel 21 of the first pipe 2 can easily flow into the flow channel gap 5 from the first flow channel mainstream portion 21a.

Additionally, in this flow circuit, in the closed state of the valve 1, the fluid inside the first flow channel 21 of the first pipe 2 cannot reach the flow channel gap 5 from the first flow channel mainstream portion 21a, due to contact between the seal member 34b of the second pipe 3 and the inner surface of the first flow channel mainstream portion 21a of the first flow channel 21, and the valve 1 is closed. In the closed state of the valve 1, in the first flow channel 21, the second pipe end 3a of the second pipe 3 passes beyond the first flow channel enlarged portion 21b and reaches into the first flow channel mainstream portion 21a.

The rotating ring 4 is a member that controls the positional relationship between the first pipe 2 and the second pipe 3 in the open state and the closed state of the valve 1. The rotating ring 4 is held by each of the first pipe 2 and the second pipe 3 on outer peripheral surfaces of the first pipe 2 and the second pipe 3, to be able to perform rotation around the central axes of the first pipe 2 and the second pipe 3 for each of the first pipe 2 and the second pipe 3.

The rotating ring 4 has a cylindrical shape with a hollow interior, and has a holding protrusion 42 on an inner circumferential surface of the cylindrical shape of the rotating ring 4, the holding protrusion 42 having a shape protruding from the inner circumferential surface toward the center of the cylindrical shape of the rotating ring 4. For example, the second pipe 3 has a holding recess 31 drilled in a direction around the axis on the outer peripheral surface of the second pipe 3. When the holding protrusion 42 of the rotating ring 4 is engaged with the holding recess 31 on the outer peripheral surface of the second pipe 3, the rotating ring 4 is held by each of the first pipe 2 and the second pipe 3, to be able to perform rotation around the central axis of the first pipe 2 and the second pipe 3. In this state, the first pipe 2 is in a state where a portion including the first pipe end 2a is inserted into a hollow portion of the rotating ring 4.

A cam follower protrusion 22 is provided on a surface of the first pipe 2. The cam follower protrusion 22 is, for example, a protrusion formed to protrude from a peripheral surface of the first pipe 2 to a direction perpendicular to the central axis of the first pipe 2. Typically, it has a cylindrical shape.

A guide cam groove 41 is drilled in a peripheral surface of the rotating ring 4. The guide cam groove 41 receives the cam follower protrusion 22. With engagement between the holding protrusion 42 of the rotating ring 4 and the holding recess 31 of the second pipe 3, and engagement between the guide cam groove 41 and the cam follower protrusion 22, the second pipe 3 functions as a plunger for the first pipe 2 in the valve 1.

The guide cam groove 41 is constituted by, for example, a first groove 41a, a second groove 41b, and a transition groove 41c. All of the first groove 41a, the second groove 41b, and the transition groove 41c are grooves having a width substantially the same as or wider than the width of the cam follower protrusion 22, and the cam follower protrusion 22 can move along each groove of the first groove 41a, the second groove 41b, and the transition groove 41c. As long as the cam follower protrusion 22 can move along each groove, the first groove 41a, the second groove 41b, and the transition groove 41c may not be penetrating groove holes penetrating the front and back of the rotating ring 4, and may be grooves formed by recesses drilled in a surface facing the first pipe 2 on which the cam follower protrusion 22 is arranged.

The first groove 41a is a groove drilled in a direction around the axis on a surface perpendicular to the axis. In the direction along the central axis of the first pipe 2, the first groove 41a is drilled close to the first pipe end 2a of the first pipe 2 to define a first position. The first groove 41a is drilled at a predetermined angle around the central axis of the first pipe 2 in a direction perpendicular to the central axis of the first pipe 2, and in a state where the cam follower protrusion 22 is located in the first groove 41a, the respective positions of the first pipe 2 and the second pipe 3 in the central axis direction are not changed.

The second groove 41b is a groove drilled in the direction around the axis on the surface perpendicular to the axis. The second groove 41b is drilled farther from the first pipe end 2a of the first pipe 2 from the first position in the direction along the central axis of the first pipe 2 to define a second position. The second groove 41b is also drilled at a predetermined angle around the central axis of the first pipe 2 in the direction perpendicular to the central axis of the first pipe 2. In a state where the cam follower protrusion 22 is located in the second groove 41b, the respective positions of the first pipe 2 and the second pipe 3 in the central axis direction are not changed. That is, the first groove 41a defining the first position is located closer to the second pipe 3 than the second groove 41b defining the second position in the direction along the central axis of the first pipe 2, and accordingly, the first groove 41a is located closer to the second pipe 3 than the second groove 41b in the direction along the central axis of the first pipe 2.

The transition groove 41c is a groove connecting the first groove 41a and the second groove 41b. The transition groove 41c is a groove extending in a direction having an angle with respect to a surface perpendicular to the central axis of the first pipe 2.

At the first position, the insertion portion 3c of the second pipe end 3a of the second pipe 3 becomes the longest, and at the second position, the insertion portion 3c of the second pipe end 3a of the second pipe 3 is defined shorter than that at the first position.

At the first position where the cam follower protrusion 22 is located in the first groove 41a, the valve 1 corresponds to the closed state. That is, at the first position, the seal member 34b of the second pipe 3 is in the first flow channel mainstream portion 21a of the first flow channel 21, and is in a state where the external surface of the seal member 34b is in contact with the inner surface of the first flow channel mainstream portion 21a of the first flow channel 21, the first flow channel 21 of the first pipe 2 and the flow channel gap 5 are fluidly disconnected (do not communicate with each other), and the fluid in the first flow channel 21 of the first pipe 2 does not reach the second flow channel 32 of the second pipe 3.

On the other hand, at the second position where the cam follower protrusion 22 is located in the second groove 41b, the valve 1 corresponds to the open state. That is, at the second position, the seal member 34b of the second pipe 3 is in a state where the seal member 34b is pulled from the first flow channel mainstream portion 21a of the first flow channel 21 and retracted into the first flow channel enlarged portion 21b, the first flow channel 21 of the first pipe 2 and the flow channel gap 5 are in fluid communication with each other, and the fluid inside the first flow channel 21 of the first pipe 2 reaches the second flow channel 32 from the opening 33 in the peripheral surface of the insertion portion 3c of the second flow channel 32 via the flow channel gap 5 from the first flow channel mainstream portion 21a, and is discharged from the opening of the second pipe termination portion 3b to the outside.

The cam follower protrusion 22 is movable between the first position and the second position in the guide cam groove 41 by rotation of the rotating ring 4 around the axis direction. The movement of the cam follower protrusion 22 between the first position and the second position in the guide cam groove 41 allows relative movement of the rotating ring 4 with respect to the first pipe 2 and the second pipe **3.**

The valve 1 can be attached so that, for example, the first pipe 2 is attached to a filter container (not illustrated), the second pipe 3 is opened to the air, and the first flow channel 21 of the first pipe 2 is upstream and the second flow channel 32 of the second pipe 3 is downstream. At this time, due to fluid communication from the first flow channel 21 of the first pipe 2 to the second flow channel 32 of the second pipe 3 in the open state of the valve 1, the fluid inside the filter container is discharged from the opening of the second pipe termination portion 3b via the first flow channel 21 and the second flow channel 32. In particular, in a preparatory step before filtration where the fluid and the air exist inside the filter container, when discharging the inside air, it can function as a so-called vent valve or drain valve for discharging the air inside the filter container and subsequently the fluid to be filtered in the filter container.

With these configurations, the valve 1 can be operated as follows to provide the following functions. In the state where the cam follower protrusion 22 is in the first groove 41a, that is, at the first position, that is, in the closed state where the valve 1 is closed, the seal member 34b of the second pipe 3 is in contact with the inner surface of the first flow channel mainstream portion 21a of the first flow channel 21. At this time, the fluid inside the filter container is not discharged from the opening of the second pipe termination portion 3b.

When discharging the fluid inside the filter container, the rotating ring 4 is rotated around the central axis of the first pipe 2 or the second pipe 3, and the cam follower protrusion 22 is moved from the first groove 41a to the transition groove 41c. In a state where the cam follower protrusion 22 is moving in the transition groove 41c, the second pipe end 3a of the insertion portion 3c of the second pipe 3 gradually leaves from the first flow channel mainstream portion 21a of the first flow channel 21 of the first pipe 2, and moved into the first flow channel enlarged portion 21b. In connection with this, the contact between the seal member 34b of the second pipe 3 and the inner surface of the first flow channel mainstream portion 21a of the first flow channel 21 is also gradually released, and separation between the first flow channel mainstream portion 21a of the first flow channel 21 and the second pipe end 3a of the second pipe 3 is started.

Furthermore, the rotating ring 4 is rotated around the central axis of the first pipe 2 or the second pipe 3, and the cam follower protrusion 22 is moved from the transition groove 41c to the second groove 41b. The state where the cam follower protrusion 22 is in the second groove 41b, that is, at the second position, that is, the open state where the valve 1 is opened is reached, the second pipe end 3a of the insertion portion 3c of the second pipe 3 is completely moved into the first flow channel enlarged portion 21b, and in connection with this, the seal member 34b of the second pipe 3 and the first flow channel mainstream portion 21a of the first flow channel 21 are completely separated from each other. With the separation between the seal member 34b of the second pipe 3 and the first flow channel mainstream portion 21a of the first flow channel 21, fluid disconnection between the first flow channel 21 of the first pipe 2 and the flow channel gap 5 is completely released, and the first flow channel 21 of the first pipe 2 and the flow channel gap 5 are in fluid communication. The fluid inside the first flow channel 21 of the first pipe 2 reaches the second flow channel 32 from the opening 33 in the peripheral surface of the insertion portion 3c of the second flow channel 32 via the flow channel gap 5 from the first flow channel mainstream portion 21a, and is discharged from the opening of the second pipe termination portion 3b to the outside.

A locking mechanism (not illustrated) may be arranged in the first groove 41a and the second groove 41b to prevent the cam follower protrusion 22 from being easily moved. The locking mechanism is a mechanism that fixes the position of the cam follower protrusion 22 with respect to the rotating ring 4. The position of the cam follower protrusion 22 with respect to the rotating ring 4 can also be fixed by, for example, arranging a claw-like member (not illustrated) to the cam follower protrusion 22. In addition, those protrusions may be protrusions in the first groove 41a and the second groove 41b that protrude in a direction perpendicular to the direction in which each of the grooves extends (a direction along the central axis of the first pipe 2), and narrow the respective widths of the first groove 41a and the second groove 41b. The locking mechanism can take any forms, as long as the position of the cam follower protrusion 22 can be fixed with respect to the rotating ring 4.

As a method of holding the rotating ring 4 to each of the first pipe 2 and the second pipe 3 to be able to perform rotation around the central axes of the first pipe 2 and the second pipe 3, the description has been given above of the example in which the holding protrusion 42 is arranged to the rotating ring 4, and the holding recess 31 is arranged on the outer peripheral surface of the second pipe 3. However, the rotating ring 4 can take other forms, as long as the rotating ring 4 is held by each of the first pipe 2 and the second pipe 3, to be able to perform rotation around the central axes of the first pipe 2 and the second pipe 3.

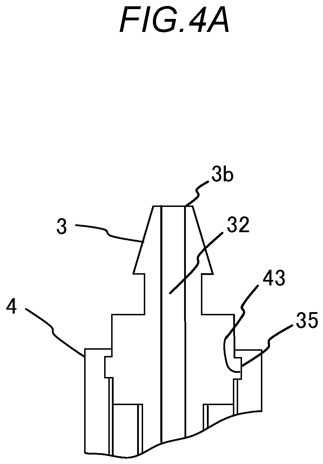

For example, contrary to the above-described embodiment, as illustrated in, for example, Fig. 4A, a holding protrusion 35 may be arranged on the outer peripheral surface of the second pipe 3, and a holding recess 43 may be arranged on the inner circumferential surface of the rotating ring 4. With engagement between the holding recess 43 of the rotating ring 4 and the holding protrusion 35 of the second pipe 3, the rotating ring 4 can be held by each of the first pipe 2 and the second pipe 3 possible, to be able to perform rotation around the central axes of the first pipe 2 and the second pipe 3.

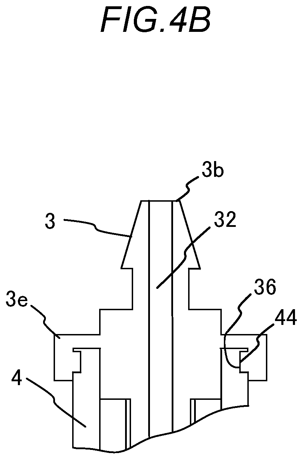

In addition, furthermore, as illustrated in, for example, Fig. 4B, a flange 3e covering the rotating ring 4 from the outside can be arranged to the second pipe 3. Additionally, a holding protrusion 36 may be arranged on an inner circumferential surface of the flange 3e of the second pipe 3 at a location where the flange 3e of the second pipe 3 covers an outer peripheral surface of the rotating ring 4, and a holding recess 44 may be arranged on the outer peripheral surface of the rotating ring 4. Also in this case, with engagement between the holding recess 44 of the rotating ring 4 and the holding protrusion 36 of the second pipe 3, the rotating ring 4 can be held by each of the first pipe 2 and the second pipe 3, to be able to perform rotation around the central axes of the first pipe 2 and the second pipe 3.

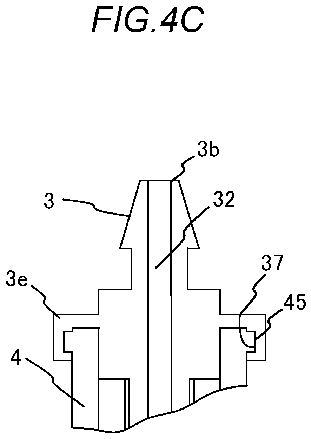

In addition, furthermore, similar to the example illustrated in, for example, Fig. 4B, the relationship between the recess and the protrusion can also be reversed by arranging the flange 3e covering the rotating ring 4 from the outside to the second pipe 3. That is, as illustrated in Fig. 4C, a holding recess 37 may be arranged on the inner circumferential surface of the flange 3e of the second pipe 3 at a location where the flange 3e of the second pipe 3 covers the outer peripheral surface of the rotating ring 4, and a holding protrusion 45 may be arranged on the outer peripheral surface of the rotating ring **4.** Also in this case, with engagement between the holding protrusion 45 of the rotating ring 4 and the holding recess 37 of the second pipe 3, the rotating ring 4 can be held by each of the first pipe 2 and the second pipe 3, to be able to perform rotation around the central axes of the first pipe 2 and the second pipe 3.

### (Embodiment of Guide Cam Groove and Cam Follower Protrusion)

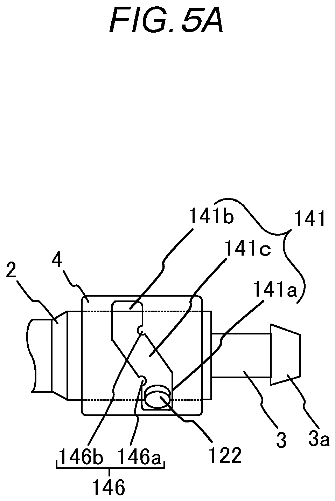

Although the basic configurations of the guide cam groove 41 and the cam follower protrusion 22 as the embodiment of the invention are as described above, it is possible to provide, in addition to the basic configurations, a locking mechanism that prevents the cam follower protrusion 22 from moving to the transition groove 41c when the cam follower protrusion 22 is located in the first groove 41a or the second groove 41b of the guide cam groove 41. Referring to Fig. 5A to Fig. 5E, an embodiment including the locking mechanism will be described as a guide cam groove 141 and a cam follower protrusion 122 including the locking mechanism. The guide cam groove 141 and the cam follower protrusion 122 are the same as the above-described guide cam groove 41 and cam follower protrusion 22, except for the locking mechanism.

The guide cam groove 141 is constituted by a first groove 141a, a second groove 141b, and a transition groove 141c. The first groove 141a, the second groove 141b, and the transition groove 141c are long holes or recesses defined between groove edges that are located opposite each other in the respective grooves. The transition groove 141c is a groove connecting the first groove 141a and the second groove 141b. All of the first groove 141a, the second groove 141b, and the transition groove 141c are grooves having widths substantially the same as or larger than the width of the cam follower protrusion 122, and the cam follower protrusion 122 can perform reciprocating movement along the first groove 141a, the second groove 141b, and the transition groove 141c. As long as the cam follower protrusion 122 can move along each groove, the first groove 141a, the second groove 141b, and the transition groove 141c may not be penetrating groove holes penetrating the front and back of the rotating ring 4, and may be grooves formed by recesses drilled in a surface facing the first pipe 2 on which the cam follower protrusion 122 is arranged.

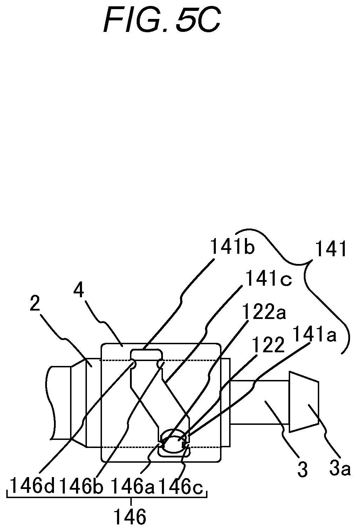

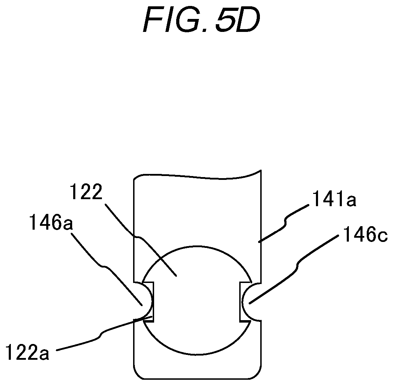

Fig. 5A to Fig. 5E each illustrates an embodiment of the guide cam groove 141 and the cam follower protrusion 122 including the locking mechanism. Fig. 5D is an enlarged view of the guide cam groove 141 in Fig. 5C, as viewed from an axis direction of the cam follower protrusion 122.

As illustrated in Fig. 5A to Fig. 5E, the first groove 141a and the second groove 141b are grooves drilled at a predetermined angle around the central axis of the first pipe 2 on a surface perpendicular to the central axis. The first groove 141a and the second groove 141b are drilled parallel to each other at different positions along the central axis of the first pipe 2. The first groove 141a is a groove that defines a first position when the cam follower protrusion 122 is at the position of the first groove 141a. The second groove 141b is a groove that defines a second position when the cam follower protrusion 122 is at the position of the second groove 141b. The first groove 141a is located closer to the second pipe 3 than the second groove 141b that defines the second position, in the direction along the central axis of the first pipe 2. As described above, the transition groove 141c is a groove that connects the first groove 141a and the second groove 141b, and is therefore a groove drilled at a predetermined angle around the central axis of the first pipe 2 to connect respective ends of the first groove 141a and the second groove 141b on a surface having an angle with respect to the central axis of the first pipe 2, that is, diagonally with respect to the central axis of the first pipe 2.

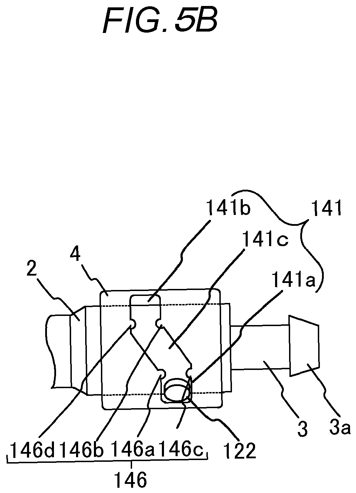

First, the embodiment illustrated in Fig. 5A and Fig. 5B will be described. Fig. 5A and Fig. 5B are diagrams illustrating the guide cam groove 141 and the cam follower protrusion 122 in this embodiment, and illustrating a state where the cam follower protrusion 122 is located in the first groove 141a. In this embodiment, a holding claw 146 as a locking mechanism is arranged between the first groove 141a and the transition groove 141c, and between the second groove 141b and the transition groove 141c. The holding claw 146 is a convex protrusion protruding toward the center of a groove from the groove edge that forms the groove of the guide cam groove 141. The protrusion length of the holding claw 146, which is the protrusion from the groove edge toward the center of the groove, can be set so that the cam follower protrusion 122 cannot naturally move from a position in one of the first groove 141a, the second groove 141b, and the transition groove 141c at which the cam follower protrusion 122 is currently located, and movement of the cam follower protrusion 122 from the groove in which the cam follower protrusion 122 is currently located to the adjacent groove is evoked by relative movement of the rotating ring 4 with respect to the first pipe 2 by a rational force suitable for use. The holding claw 146 is arranged at a curved portion of the guide cam groove 141 where the extending direction of the first groove 141a and the extending direction of the transition groove 141c are changed. That is, in the guide cam groove 141, using the locking mechanism, the cam follower protrusion 122 is kept at the first position or the second position by the holding claw 146.

For example, in particular, as illustrated in Fig. 5A, a holding claw 146a and a holding claw 146b are arranged at two locations that are on the inner side of curved portions of the guide cam groove 141, that is, the holding claw 146a is arranged at the position of the border between the first groove 141a and the transition groove 141c, and the holding claw 146b is arranged at the position of the border between the second groove 141b and the transition groove 141c. Furthermore, as illustrated in Fig. 5B, holding claws 146a, 146b, 146c, and 146d can also be arranged on both the inner side and the outer side of the two curved portions of the guide cam groove 141. That is, in the vicinity of the border between the first groove 141a and the transition groove 141c, the holding claw 146a is arranged on an inner edge of the curved portion of the guide cam groove 141, and the holding claw 146c is arranged on an outer edge of the curved portion of the guide cam groove 141. In addition, in the vicinity of the border between the second groove 141b and the transition groove 141c, the holding claw 146b is arranged on an inner edge of the curved portion of the guide cam groove 141, and the holding claw 146d is arranged on an outer edge of the curved portion of the guide cam groove 141. Furthermore, although not illustrated in the figures, contrary to Fig. 5A, the holding claws 146 may be arranged on two outer groove edges of the curved portions of the guide cam groove 141. In this case, in the example of Fig. 5B, only the holding claw 146c and the holding claw 146d are arranged. Each of the holding claws 146 is formed to protrude toward the center of the guide cam groove 141 from an edge of the guide cam groove. In addition, here, although the example has been described in which the holding claws 146 are arranged at the curved portions of the guide cam groove 141, the holding claws 146 may be arranged at the groove edges in the first groove 141a and the second groove 141b, instead of the curved portions of the guide cam groove 141.

Furthermore, a further embodiment will be described with reference to Fig. 5C and Fig. 5D. Fig. 5C is a diagram illustrating the guide cam groove 141 and the cam follower protrusion 122 in this embodiment, and illustrating a state where the cam follower protrusion 122 is located in the first groove 141a. Fig. 5D is a diagram of the state of the cam follower protrusion 122 of Fig. 5C, as viewed from a direction directly opposite to the cam follower protrusion. In the embodiment described with Fig. 5A and Fig. 5B, the locking mechanism constituted only by the holding claws 146 has been described. Here, it comprises the holding claw 146, and receiving grooves 122a arranged in the cam follower protrusion 122. The guide cam groove 141 and the holding claws 146 are as described above. The receiving grooves 122a are grooves that are arranged in portions of the cam follower protrusion 122 facing the groove edge of the guide cam groove 141, and that can keep the cam follower protrusion 122 at a predetermined location by receiving the holding claw 146 to be engaged with the holding claw 146. The holding claws 146 have protruding shapes protruding from the groove edges of the first groove 141a and the second groove 141b into the grooves, and the receiving grooves 122a are grooves that are arranged in the periphery of the cam follower protrusion 122 facing the groove edges of the first groove 141a and the second groove 141b, and that have recess shapes having a groove depth in a direction away from the groove edge and capable of being engaged with the cam follower protrusion 122.

In other words, in the embodiment described with reference to Fig. 5C and Fig. 5D, it becomes possible for the locking mechanism to not only keep the cam follower protrusion 122 in predetermined sections of the first groove 141a and the second groove 141b isolated by the holding claws 146, but also keep the cam follower protrusion 122 in the locations where the holding claws 146 are arranged. Therefore, in this embodiment, the holding claws 146 and the receiving grooves 122a of the cam follower protrusion 122 are arranged at positions where the cam follower protrusion 122 positively exists inside the first groove 141a and the second groove 141b, even in a state where the holding claws 146 are received by the receiving grooves 122a of the cam follower protrusion 122 inside the first groove 141a and the second groove 141b, instead of the curved portions of the guide cam groove 141. In the example illustrated in Fig. 5C and Fig. 5D, although the example is illustrated in which the holding claws 146a and 146c and the holding claws 146b and 146d are arranged to the groove edges on both sides defining the first groove 141a and the groove edges on both sides defining the second groove 141b, respectively, the holding claws 146 may not be arranged to the respective groove edges on the both sides defining the first groove 141a and the second groove 141b, but one holding claw 146 may be arranged to one of the groove edges defining the first groove 141a, and one holding claw 146 may be arranged to one of the groove edges defining the second groove 141b.

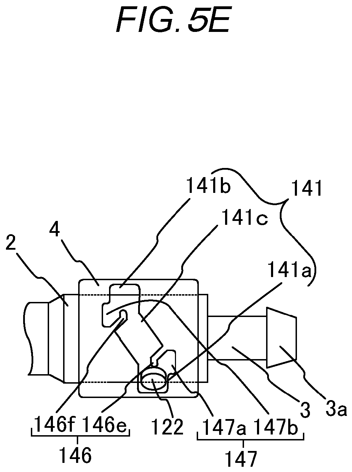

Subsequently, referring to Fig. 5E, a description will be given of an embodiment of keeping the cam follower protrusion 122 in the first groove 141a and the second groove 141b more firmly than in the embodiment illustrated in Fig. 5A to Fig. 5D. The configuration of the guide cam groove 141 illustrated in Fig. 5E is similar to that in the embodiment of Fig. 5A to Fig. 5D, and Fig. 5E also illustrates a state where the cam follower protrusion 122 is located inside the first groove 141a. In this embodiment, the guide cam groove 141 includes a holding claw 146e extending from the direction of the transition groove 141c toward the first groove 141a, and a holding claw 146f extending from the direction of the transition groove 141c toward the second groove 141b. The holding claw 146e has elasticity and is bendable toward the groove edge of the first groove 141a, and when the holding claw 146e is bent, a front end side of the holding claw 146e can be housed in an evacuation groove 147a arranged at the groove edge of the first groove 141a. Similarly, the holding claw 146f also has elasticity and is bendable toward the groove edge of the second groove 141b, and when the holding claw 146f is bent, a front end side of the holding claw 146f can be housed in an evacuation groove 147b arranged at the groove edge of the second groove 141b.

In a normal state, the holding claw 146e extends between the first groove 141a and the transition groove 141c to limit the width of the groove, and serves as an obstacle to the movement of the cam follower protrusion 122 between the first groove 141a and the transition groove 141c, and similarly, the holding claw 146f extends between the second groove 141b and the transition groove 141c to limit the width of the groove, and serves as an obstacle to the movement of the cam follower protrusion 122 between the second groove 141b and the transition groove 141c.

On the other hand, when the front end side of the holding claw 146e is housed in the evacuation groove 147a, and the front end side of the holding claw 146f is housed in the evacuation groove 147b, the holding claw 146e and the holding claw 146f do not serve as the obstacles to the movement of the cam follower protrusion 122 between the first groove 141a and the transition groove 141c and between the second groove 141b and the transition groove 141c, and the cam follower protrusion 122 is movable between the first groove 141a and the transition groove 141c and between the second groove 141b and the transition groove 141c.

Accordingly, the cam follower protrusion 122 is easily accommodated in the first groove 141a from the transition groove 141c without a large load, and once the cam follower protrusion 122 is accommodated in the first groove 141a, the cam follower protrusion 122 cannot naturally return from the first groove 141a to the transition groove 141c. Fig. 5E illustrates this state. Similarly, the cam follower protrusion 122 is also easily accommodated in the second groove 141b from the transition groove 141c without a large load, and once the cam follower protrusion 122 is accommodated in the second groove 141b, the cam follower protrusion 122 cannot naturally return from the second groove 141b to the transition groove 141c.

After the cam follower protrusion 122 is accommodated in the first groove 141a or the second groove 141b, the holding claw 146e is bent to the evacuation groove 147a or the holding claw 146f is bent to the evacuation groove 147b to communicate the first groove 141a and the transition groove 141c or communicate the second groove 141b and the transition groove 141c, respectively, to secure the groove width, so that the movement of the cam follower protrusion 122 is evoked. In the locking mechanism of this embodiment, it becomes possible to positively and firmly keep the cam follower protrusion 122 in the first groove 141a and the second groove 141b.

This application claims priority from Japanese Patent Application No. 2022-139810 filed on September 2, 2022 and Japanese Patent Application No. 2022-195291 filed on December 7, 2022, the contents of which are incorporated herein by reference and constitute a part of this application.

### Reference Signs List

1 valve
2 first pipe
2a first pipe end
2b first pipe end opening
21 first flow channel
22, 122 cam follower protrusion
3 second pipe
3a second pipe end
3b second pipe termination portion
3c insertion portion
3d groove
3e flange
31 holding recess
32 second flow channel
33 second flow channel outlet
34a, 34b seal member
35, 36 holding protrusion
4 rotating ring
41, 141 guide cam groove
42, 45 holding protrusion
43, 44 holding recess
122a receiving groove
146 holding claw
147 evacuation groove
5 flow channel gap
D1 insertion length (when closed)
D2 insertion length (when opened)

## Claims

1. A valve comprising:
a first pipe having a first pipe end, the first pipe having an external shape of a cylinder, the first pipe having a first flow channel inside, the first flow channel extending in a direction of an axis of the cylinder, the first flow channel forming an opening in the first pipe end;
a second pipe extending coaxially with the axis, the second pipe having a second pipe end, the second pipe having an external shape of a cylinder, the second pipe having a second flow channel inside, the second flow channel extending in the direction of the axis, an insertion portion of the second pipe end being inserted into the first flow channel of the first pipe from the opening of the first pipe; and
a rotating ring held by each of the first pipe and the second pipe on an outer peripheral surface of the first pipe and an outer peripheral surface the second pipe, to be able to perform rotation around the axis,
wherein the second flow channel does not reach the second pipe end, and extends toward an inner wall of the first flow channel in the insertion portion of the second flow channel to form an opening in the insertion portion of the second flow channel,
wherein a cam follower protrusion is provided on a surface of the first pipe,
wherein the rotating ring includes a guide cam groove configured to receive the cam follower protrusion, the cam follower protrusion moved, by the rotation of the rotating ring, in the guide cam groove between a first position and a second position so that the first pipe and the second pipe perform relative movement, the insertion portion of the second pipe end of the second pipe becoming longest at the first position, the insertion portion of the second pipe end of the second pipe becoming shorter than at the first position at the second position, and
wherein the valve has a closed state and an open state, the first flow channel and the second flow channel being not in fluid communication at the first position in the closed state, the first flow channel and the second flow channel being in fluid communication at the second position in the open state.

2. A valve according to claim 1,
wherein the guide cam groove consists of a first groove, a second groove, and a transition groove, the first groove defining the first position close to the second pipe in the direction of the axis, the first groove drilled in a direction around the axis on a surface perpendicular to the axis, the second groove defining the second position farther from the second pipe than the first position in the direction of the axis, the second groove drilled in a direction around the axis on a surface perpendicular to the axis, the transition groove connecting the first groove and the second groove.

3. A valve according to claim 1,
wherein the second pipe includes, on the outer peripheral surface of the second pipe, a holding protrusion, or a holding recess drilled in a direction around the axis,
wherein the rotating ring includes a holding protrusion to be engaged with the holding recess, or a holding recess drilled in a direction around the axis to be engaged with the holding protrusion, and
wherein the rotating ring is held to perform the rotation with respect to the second pipe by engagement between the holding protrusion and the holding recess.

4. A valve according to claim 1,
wherein the first flow channel includes a first flow channel enlarged portion having one end forming the opening, and a first flow channel mainstream portion having a smaller diameter than the first flow channel enlarged portion and communicating with another end of the first flow channel enlarged portion, and
wherein the second pipe includes a first seal member and a second seal member different from the first seal member, the first seal member having an external surface constantly in contact with an inner surface of the first flow channel enlarged portion, the second seal member having an external surface in contact with an inner surface of the first flow channel mainstream portion in the closed state of the valve and not in contact with the inner surface of the first flow channel mainstream portion in the open state of the valve.

5. A valve according to any one of claims 1 to 4,
wherein the valve is attached to a filter container, wherein in the first pipe, the first flow channel communicates with an inside of the filter container on an opposite side of the first flow channel from the first pipe end,
wherein the first flow channel of the first pipe is upstream, and the second flow channel of the second pipe is downstream,
wherein the second pipe includes a second pipe termination portion, the second pipe termination portion having an opening of the second flow channel, the second pipe termination portion being an end on an opposite side of the second pipe from the second pipe end, and
wherein in the open state, the valve discharges fluid inside the filter container from the opening of the second pipe termination portion via the first flow channel and the second flow channel.

6. A valve according to claim 1,
wherein the guide cam groove includes a locking mechanism including a holding claw protruding from a groove edge defining the guide cam groove, and the cam follower protrusion is kept at the first position or the second position by the locking mechanism.

7. A valve according to claim 6,
wherein the locking mechanism includes a receiving groove, the receiving groove arranged in the cam follower protrusion, the receiving groove configured to receive the holding claw.

8. A filter container including a valve,
the valve comprising:
a first pipe having a first pipe end, the first pipe having an external shape of a cylinder, the first pipe having a first flow channel inside, the first flow channel extending in a direction of an axis of the cylinder, the first flow channel forming an opening in the first pipe end, an opposite side of the first flow channel from the first pipe end communicating with an inside of the filter container;
a second pipe extending coaxially with the axis, the second pipe having a second pipe end, the second pipe having an external shape of a cylinder, the second pipe having a second flow channel inside, the second flow channel extending in the direction of the axis, an insertion portion of the second pipe end being inserted into the first flow channel of the first pipe from the opening of the first pipe; and
a rotating ring held by each of the first pipe and the second pipe on outer peripheral surfaces of the first pipe and the second pipe, to be able to perform rotation around the axis,
wherein the second flow channel does not reach the second pipe end, and extends toward an inner wall of the first flow channel in the insertion portion of the second flow channel to form an opening in the insertion portion of the second flow channel,
wherein a cam follower protrusion is provided on a surface of the first pipe,
wherein the rotating ring includes a guide cam groove configured to receive the cam follower protrusion, the cam follower protrusion moved, by the rotation of the rotating ring, in the guide cam groove between a first position and a second position so that the first pipe and the second pipe perform relative movement, the insertion portion of the second pipe end of the second pipe becoming longest at the first position, the insertion portion of the second pipe end of the second pipe becoming shorter than at the first position at the second position, and
wherein the valve has a closed state and an open state, the first flow channel and the second the flow channel being not in fluid communication at the first position in the closed state, the first flow channel and the second the flow channel being in fluid communication at the second position in the open state.

9. A filter container according to claim 8,
wherein the guide cam groove consists of a first groove, a second groove, and a transition groove, the first groove defining the first position close to the second pipe in the direction of the axis, the first groove drilled in a direction around the axis on a surface perpendicular to the axis, the second groove defining the second position farther from the second pipe than the first position in the direction of the axis, the second groove drilled in a direction around the axis on a surface perpendicular to the axis, the transition groove connecting the first groove and the second groove.

10. A filter container according to claim 8,
wherein the second pipe includes, on the outer peripheral surface of the second pipe, a holding protrusion, or a holding recess drilled in a direction around the axis,
wherein the rotating ring includes a holding protrusion to be engaged with the holding recess, or a holding recess drilled in a direction around the axis to be engaged with the holding protrusion, and
wherein the rotating ring is held to perform the rotation with respect to the second pipe by engagement between the holding protrusion and the holding recess.

11. A filter container according to claim 8,
wherein the first flow channel includes a first flow channel enlarged portion having one end forming the opening, and a first flow channel mainstream portion having a smaller diameter than the first flow channel enlarged portion and communicating with another end of the first flow channel enlarged portion, and
wherein the second pipe includes a first seal member and a second seal member different from the first seal member, the first seal member having an external surface constantly in contact with an inner surface of the first flow channel enlarged portion, the second seal member having an external surface in contact with an inner surface of the first flow channel mainstream portion in the closed state of the valve and not in contact with the inner surface of the first flow channel mainstream portion in the open state of the valve.

12. A filter container according to any one of claims 8 to 11,
wherein, in the valve, the first flow channel of the first pipe is upstream, and the second flow channel of the second pipe is downstream,
wherein the second pipe includes a second pipe termination portion, the second pipe termination portion having an opening of the second flow channel, the second pipe termination portion being an end on an opposite side of the second pipe from the second pipe end, and
wherein in the open state, the valve discharges fluid inside the filter container from the opening of the second pipe termination portion via the first flow channel and the second flow channel.

13. A filter container according to claim 8,
wherein the guide cam groove includes a locking mechanism including a holding claw protruding from a groove edge defining the guide cam groove, and the cam follower protrusion is kept at the first position or the second position by the locking mechanism.

14. A filter container according to claim 13,
wherein the locking mechanism includes a receiving groove, the receiving groove arranged in the cam follower protrusion, the receiving groove configured to receive the holding claw.
